(19) Europäisches Patentamt
European Patent Office
Office européen des brevets

(11) **EP 1 586 613 B1**

(12) **EUROPEAN PATENT SPECIFICATION**

(45) Date of publication and mention
of the grant of the patent:
**31.12.2008 Bulletin 2009/01**

(51) Int Cl.:
***C09D 127/18*** (2006.01)     ***C09D 133/00*** (2006.01)
***C09K 3/18*** (2006.01)

(21) Application number: **05252316.4**

(22) Date of filing: **14.04.2005**

(54) **Mixed coating material and manufacturing method of the same**

Gemischtes Beschichtungsmaterial und dessen Herstellungsverfahren

Matériau de revêtement mélangé et sa méthode de préparation

(84) Designated Contracting States:
**DE FR GB IT**

(30) Priority: **14.04.2004 JP 2004119074**

(43) Date of publication of application:
**19.10.2005 Bulletin 2005/42**

(73) Proprietor: **Fuji Jukogyo Kabushiki Kaisha
Tokyo 160-8316 (JP)**

(72) Inventors:
 • **Sakabe, Atsuhiko, c/o Fuji Jukogyo Kabushiki K.
   Tokyo 160-8316 (JP)**
 • **Soejima, Hideki, c/o Fuji Jukogyo Kabushiki K.
   Tokyo 160-8316 (JP)**
 • **Adachi, Takafumi, c/o Fuji Jukogyo Kabushiki K.
   Tokyo 160-8316 (JP)**
 • **Tsukamoto, Yasuhiro, c/o NTT Advanced Tech.
   Corp.
   Tokyo 163-0431 (JP)**

(74) Representative: **W.P. Thompson & Co.
Coopers Building
Church Street
Liverpool L1 3AB (GB)**

(56) References cited:
 **EP-A- 0 754 738          GB-A- 2 340 495
 US-A- 6 117 555**

 • **PATENT ABSTRACTS OF JAPAN vol. 1998, no.
   06, 30 April 1998 (1998-04-30) & JP 10 036756 A
   (SHINTO PAINT CO LTD), 10 February 1998
   (1998-02-10)**
 • **PATENT ABSTRACTS OF JAPAN vol. 1999, no.
   04, 30 April 1999 (1999-04-30) & JP 11 001652 A
   (TOYO INK MFG CO LTD; TOPPAN PRINTING CO
   LTD), 6 January 1999 (1999-01-06)**
 • **PATENT ABSTRACTS OF JAPAN vol. 1996, no.
   04, 30 April 1996 (1996-04-30) & JP 07 331122 A
   (HOKKAIDO PREFECTURE), 19 December 1995
   (1995-12-19)**
 • **DATABASE CAPLUS [Online] CHEMICAL
   ABSTRACTS SERVICE, COLUMBUS, OHIO, US;
   2 August 2000 (2000-08-02), SHINOHARA,SEIGO:
   "Water-repellent antisoiling treating agents
   contg. PTFE and spherical polymer powders in
   the petroleum solvents for automobiles"
   XP002338128 retrieved from STN Database
   accession no. 2000:526855 & JP 2000 212547 A
   (TAIHO KOGYO CO) 2 August 2000 (2000-08-02)**

**Description**

The disclosure of Japanese Patent Application No. 2004-119074 filed on 04/14/2004 including the specification drawing and abstract is incorporated herein by reference in its entirety.

BACKGROUND OF THE INVENTION

Field of the Invention

The present invention relates to a mixed coating material and a manufacturing method of the same. More particularly, the present invention relates to a mixed coating material having an anti-icing and deicing effect of allowing a coating film to cope with erosion, and a manufacturing method of the same.

Description of Related Art

In an earlier technology, an aircraft is provided with an anti-icing and deicing device for preventing an ice accretion on the aircraft or growth of the ice accretion. For the device, a heating anti-icing and deicing device using an engine bleed air or electricity, a pneumatic deicer using deicer boots and a chemical deicer using alcohol have been used. The anti-icing and deicing device of the aircraft plays a role in preventing the ice accretion on the aircraft or growth of the ice accretion and thereby reducing wasteful fuel consumption of the aircraft during navigation caused by impairment of smooth air flow of the aircraft due to the ice accretion and increase in an air resistance due to decrease in wing lift.

In reality, however, even in the aircraft having the anti-icing and deicing device, the ice accretion occurs in a part where the device cannot completely prevent the ice accretion, that is, in a part beyond the capability of the device. As described in NASA TM83564, NASA makes a research report that the ice accretion in the part beyond the capability of the anti-icing and deicing device gets involved in a resistance of about 30% in the whole resistance. Difficulty in preventing the ice accretion or growth of the ice accretion in the part beyond the capability of the anti-icing and deicing device in the aircraft becomes a serious negative factor that fuel of the aircraft is wastefully consumed because the resistance during navigation increases in the part beyond the capability of the anti-icing and deicing device.

In order to solve the above-described problems, it is considered that the ice accretion in the portion beyond the capability of the anti-icing and deicing device in the aircraft, such as an antenna, a flap hinge and a control horn is allowed to be prevented by addition of the anti-icing and deicing device or by a higher operation of the device. However, in the present circumstances, it is difficult to apply an anti-icing and deicing effect of the anti-icing and deicing device to the portion beyond the capability of the anti-icing and deicing device in the aircraft. This is because increase in weight of the aircraft due to the addition of the anti-icing and deicing device or consumption of the aircraft fuel due to the higher operation of the device rather leads to more consumption of definite aircraft fuel.

For this reason, industrial circles desire and study a coating material having a high anti-icing and deicing effect, in which the effect is easily applied also to the portion beyond the capability of the anti-icing and deicing device in the aircraft, that is, to the whole surface of the aircraft, and when applying the effect, increase in weight of the aircraft is small and fuel is scarcely consumed during navigation.

For the use of the coating material having the high anti-icing and deicing effect, the following examples are given. JP-Tokukaisho-58-221800A gives an example that the surface of the aircraft is coated with a fluorocarbon resin-containing organic solvent having a water repellent effect. JP-Tokukai-2000-44863A gives an example that the surface of an article to be coated is coated with a mixed coating material prepared by dissolving in an organic solvent a low molecular weight tetrafluoroethylene resin ($-C_2F_4-C_2F_4- \cdots -C_2F_4-$; a low molecular weight tetrafluoroethylene resin having a molecular weight of 500 to 10000 obtained by a manufacturing method described in JP-Tokukouhei-6-067859B; hereinafter referred to as a "PTFE") having a high water repellent effect, and polyorganosiloxane as a silicon resin. When the article to be coated is coated with the mixed coating material prepared by mixing the PTFE with the silicon resin, surface energy on the film surface can be extremely reduced, so that the excellent water repellent effect and the anti-icing and deicing effect can be obtained. Further, a siloxane bond is chemically stable and is high in the cross-linking density. Therefore, the use of the mixed coating material for the article to be coated is proposed in a wide range of fields.

However, even when a coating material as described in JP-Tokukaisho-58-221800A prepared by simply mixing a fluorocarbon resin in an organic solvent is coated on the surface of an aircraft as an article to be coated, the surface of the article to be coated cannot be uniformly coated because the fluorocarbon resin is not sufficiently compatible with the organic solvent due to low polarization. Therefore, there arises a problem that an anti-icing and deicing effect due to a water repellent effect is not obtained, and a coating film is peeled by erosion.

Further, the coating material as described in JP-Tokukai-2000-44863A prepared by mixing a PTFE and a silicon resin is coated on a surface of a model wing of an aluminum test specimen. After drying the film, erosion is generated on the film to perform an ice accretion test under conditions of a wind velocity of 18 m/sec. As a result of this test, the water repellent effect, namely, the anti-icing and deicing effect cannot be observed at all on the film of the mixed coating material prepared by mixing the PTFE with the silicon resin, and the film has the same ice accretion amount as that of a polyurethane film. After completion of the test operation, the mixed coating material prepared by mixing the PTFE and the silicon resin is coated on the surface of the model wing of the aluminum test specimen and then a surface observation by means of an electron microscope is performed on the surface. From the surface observation, it is found that from the surface of the model wing of the aluminum test specimen, the film of the mixed coating material prepared by mixing the PTFE with the silicon resin is peeled by erosion. The reason why the film of the coating material prepared by mixing the PTFE with the silicon resin is peeled is considered that film hardness (pencil hardness by an actual measurement according to JIS K-5400 8.4.2) of the coating material prepared by mixing the PTFE with the silicon resin is reduced by the addition of the PTFE. Accordingly, also when the coating material prepared by mixing the PTFE with the silicon resin is coated on the aircraft, there arises a problem that the film is peeled by erosion which occurs during navigation and as a result, the anti-icing and deicing effect is lost.

## SUMMARY OF THE INVENTION

Therefore, the object of the present invention is to provide a mixed coating material having the film hardness of 1H or more, which is high in the anti-icing and deicing effect and of which the film is not peeled, particularly, even by erosion. The object of the present invention includes providing a manufacturing method of the same.

In order to solve the above problem, in accordance with the first aspect of the invention, a mixed coating material comprises:

> a mixed resin including an ultraviolet curable resin and a low molecular weight tetrafluoroethylene resin; and
> a hydrofluorocarbon-containing organic solvent, wherein the mixed resin and the hydrofluorocarbon-containing organic solvent are mixed to allow the coating material to have film hardness of 1H or more.

According to the first aspect of the invention, the mixed resin is a resin constituted by mixing the PTFE with the ultraviolet curable resin having the high film hardness and therefore, reduction in the film hardness caused by the PTFE is suppressed, so that the mixed coating material is allowed to have the film hardness of 1H or more. Moreover, the mixed resin is mixed using the hydrofluorocarbon-containing organic solvent and therefore, a surface energy difference between the ultraviolet curable resin and the PTFE is reduced, so that generation of a gap between the ultraviolet curable resin and the PTFE can be reduced.

Also, according to the first aspect of the invention, by mixing the ultraviolet curable resin, the mixed coating material is allowed to have the film hardness of 1H or more, so that an effect of allowing the film to withstand erosion can be provided. Further, by using the hydrofluorocarbon-containing organic solvent, generation of a gap between both the resins is suppressed to allow improvement in adhesion, so that an effect of allowing the mixed coating material to be uniformly coated on a surface of the article to be coated can be provided. Accordingly, an effect capable of obtaining the mixed coating material simultaneously having the high water repellent effect given by the PTFE and the high film hardness given by the ultraviolet curable resin can be provided.

Further, the mixed coating material provides an effect that when coating the mixed coating material on an objective place requiring the anti-icing and deicing effect, such as a transportation device, a wind turbine blade, an antenna, an electric wire and an architectural structure, the film is not peeled by erosion and the anti-icing and deicing effect can be easily obtained not by the anti-icing and deicing device but by an aerodynamic force or vibration thereof. Further, the mixed coating material provides the following effects. When being simultaneously used with the anti-icing and deicing device in a transportation device coated with the mixed coating material, the mixed coating material can exert the anti-icing and deicing effect even on a portion beyond the capability of the anti-icing and deicing effect of the anti-icing and deicing device, and moreover can reduce energy consumption to exert the anti-icing and deicing effect on a portion within the capability of the effect of the device.

Particularly in the aircraft where erosion occurs, the mixed coating material also provides an effect that the film formed by the mixed coating material can withstand erosion and that weight loss of the aircraft and reduction of fuel consumption during navigation can be attained by the reduction of installation area for the anti-icing and deicing device, by making the anti-icing and deicing device smaller, and by the reduction in fuel consumption.

Preferably, the ultraviolet curable resin comprises a prepolymer, a monomer and a photopolymerization initiator and is cured by irradiation of UV having a wavelength region of 200 to 400 nm.

According to this invention, the ultraviolet curable resin comprises a prepolymer, a monomer and a photopolymerization initiator, is cured by irradiation of UV having a wavelength region of 200 to 400 nm and therefore, the reduction in the film hardness of the mixed coating material caused by the PTFE is suppressed, so that the mixed coating material is more preferably allowed to have the film hardness of 1H or more. Moreover, since the hydrofluorocarbon-containing organic solvent is used, the ultraviolet curable resin is more preferably mixed with the PTFE and therefore, generation of a gap between the ultraviolet curable resin and the PTFE can be reduced.

Also, according to this invention, the ultraviolet curable resin comprises a prepolymer, a monomer and a photopolymerization initiator and is cured by irradiation of UV having a wavelength region of 200 to 400 nm, so that reduction in the film hardness of the mixed coating material caused by mixing the PTFE can be suppressed and as a result, the mixed coating material having the film hardness of 1H or more can be preferably obtained. Therefore, the mixed coating material provides an effect capable of exerting the anti-icing and deicing effect of allowing the film to withstand erosion by the coating on an objective place in a transportation device or by simultaneous use with the anti-icing and deicing device.

Preferably, the ultraviolet curable resin has a film hardness of 4H or more.

According to this invention, the ultraviolet curable resin has a film hardness of 4H or more and therefore, the reduction in the film hardness of the mixed coating material particularly caused by mixing the PTFE is suppressed, so that the mixed coating material is more preferably allowed to have the film hardness of 1H or more.

Also, according to this invention, the ultraviolet curable resin has a film hardness of 4H or more, so that reduction in the film hardness of the mixed coating material caused by mixing the PTFE can be reduced and as a result, the mixed coating material having a film hardness of 1H or more can be preferably obtained. Therefore, the mixed coating material provides an effect capable of exerting the anti-icing and deicing effect of allowing the film to withstand erosion by the coating on an objective place in a transportation device or by simultaneous use with the anti-icing and deicing device.

Preferably, the mixed resin comprises 40 to 99% by weight of the ultraviolet curable resin and 1 to 60% by weight of the low molecular weight tetrafluoroethylene resin.

According to this invention, the mixed resin is constituted by mixing 40 to 99% by weight of the ultraviolet curable resin with 1 to 60% by weight of the PTFE and therefore, the reduction in the film hardness of the mixed coating material particularly caused by mixing the PTFE is suppressed, so that the mixed coating material is most preferably allowed to have a film hardness of 1H or more.

Also, according to this invention, the mixed resin is constituted by mixing 40 to 99% by weight of the ultraviolet curable resin with 1 to 60% by weight of the PTFE, so that there can be obtained the mixed coating material having a film hardness of 1H or more and moreover, there can be most preferably obtained the mixed coating material in which a surface energy difference between the ultraviolet curable resin and the PTFE at the time of mixing the hydrofluorocarbon is reduced to allow improvement in wettability and in which generation of a gap between the ultraviolet curable resin and the PTFE is suppressed to allow improvement in adhesion. Therefore, the mixed coating material provides an effect capable of exerting the anti-icing and deicing effect of allowing the film to withstand erosion, particularly in the aircraft, by the coating on an objective place in a transportation device or by simultaneous use with the anti-icing and deicing device.

Preferably, the hydrofluorocarbon-containing organic solvent comprises 1 to 80% by weight of the hydrofluorocarbon and 20 to 99% by weight of an organic solvent.

According to this invention, the hydrofluorocarbon-containing organic solvent is constituted by mixing 1 to 80% by weight of the hydrofluorocarbon with 20 to 99% by weight of the organic solvent and therefore, a surface energy difference between the ultraviolet curable resin and the PTFE is reduced, so that generation of a gap between the ultraviolet curable resin and the PTFE can be most preferably reduced.

Also, according to this invention, the hydrofluorocarbon-containing solvent is constituted by mixing 1 to 80% by weight of the hydrofluorocarbon with 20 to 99% by weight of the organic solvent, so that there can be more preferably obtained the mixed coating material in which a surface energy difference between the PTFE and the ultraviolet curable resin which is reduced in a surface energy by being dissolved in the hydrofluorocarbon is reduced so that generation of a gap between both the resins is reduced to allow improvement in adhesion. Therefore, the mixed coating material can be uniformly and easily coated on the surface of the article to be coated and provides an effect capable of exerting the anti-icing and deicing effect of allowing the film to withstand erosion by the coating on an objective place in a transportation device or by simultaneous use with the anti-icing and deicing device.

Preferably, the organic solvent is an organic solvent comprising one or more selected from a group consisting of an alcohol organic solvent, an aromatic organic solvent and an aliphatic organic solvent.

According to this invention, the organic solvent is an organic solvent comprising any one of an alcohol organic solvent, an aromatic organic solvent and an aliphatic organic solvent, or a plurality thereof and therefore, a surface energy difference between the ultraviolet curable resin which is reduced in a surface energy by being dissolved in the hydrofluorocarbon and the PTFF is most properly reduced, so that both of the resins can be easily compatible with each other.

Also, according to this invention, the organic solvent is an organic solvent comprising any one of an alcohol organic solvent, an aromatic organic solvent and an aliphatic organic solvent, or a plurality thereof, so that there can be most preferably obtained the mixed coating material in which a surface energy difference between the PTFE and the ultraviolet curable resin which is reduced in a surface energy by being dissolved in the hydrofluorocarbon is reduced to allow both of the resins to be easily compatible with each other. Therefore, the mixed coating material provides an effect capable of exerting the anti-icing and deicing effect of allowing the film to withstand erosion by the coating on an objective place in a transportation device or by simultaneous use with the anti-icing and deicing device.

In accordance with the second aspect of the invention, a method for manufacturing a mixed coating material comprises preparing the mixed coating material to have a film hardness of 1H or more by adding a hydrofluorocarbon-containing organic solvent to a mixed resin including an ultraviolet curable resin and a low molecular weight tetrafluoro-oethylene resin.

According to the second aspect of the invention, in a method for manufacturing the mixed coating material, the coating material is prepared to have a film hardness of 1H or more by adding the hydrofluorocarbon-containing organic solvent to the mixed resin comprising the ultraviolet curable resin and the PTFE and therefore, the mixed coating material having the preferable high water repellent effect and high film hardness of allowing the film to cope with erosion can be obtained.

Also, according to the second aspect of the invention, the mixed coating material is prepared to have a film hardness of 1H or more by adding the hydrofluorocarbon-containing organic solvent to the mixed resin comprising the ultraviolet curable resin and the PTFE, so that there can be obtained the coating material having the high water repellent effect and the high film hardness effect, in which the ultraviolet curable resin and the PTFE are preferably mixed. Therefore, the mixed coating material provides an effect capable of exerting the anti-icing and deicing effect of allowing the film to withstand erosion by the coating on an objective place in a transportation device or by simultaneous use with the anti-icing and deicing device.

BRIEF DESCRIPTION OF THE DRAWINGS

By way of example only, specific embodiments of the present invention will now be described with reference to the accompanying drawings, in which:-

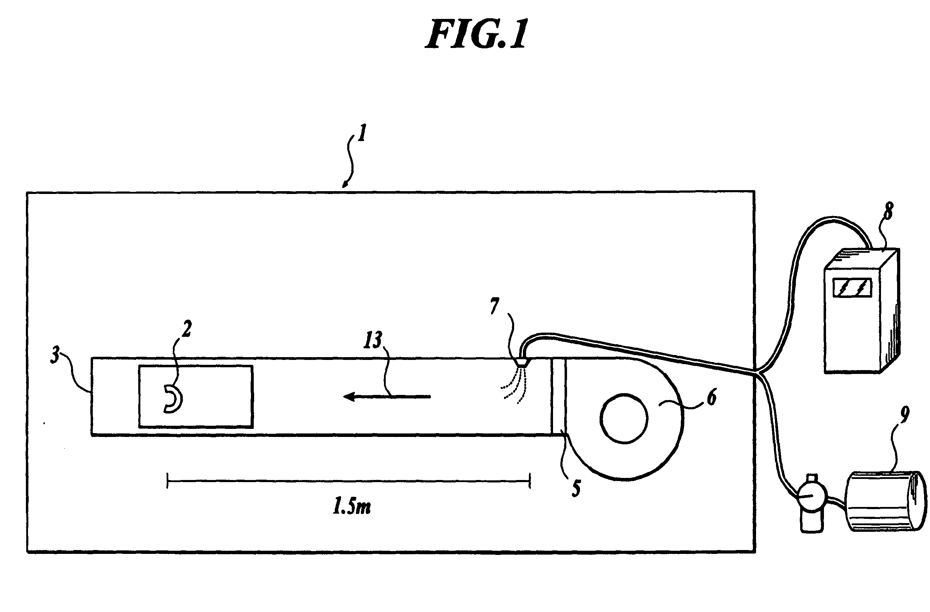

FIG. 1 is a schematic view of an icing tunnel in Examples; and
FIG. 2 is a schematic view of a model wing of an aluminum test specimen for use in an ice accretion test in Examples.

DETAILED DESCRIPTION OF THE INVENTION

Preferred embodiments according to the present invention are described below.

The mixed coating material according to the present invention is a mixture constituted by mixing a mixed resin comprising an ultraviolet curable resin and a PTFE, with a hydrofluorocarbon-containing organic solvent.

The ultraviolet curable resin comprises a prepolymer, a monomer and a photopolymerization initiator. The resin is cured by irradiation of UV having a wavelength region of 200 to 400 nm. The resin comprises any one of acrylate resin, acryl-silicone resin, acrylic urethane resin, polyester resin, epoxy resin, urethane resin and fluorocarbon resin having high film hardness or a plurality thereof as a main component. When using this ultraviolet curable resin, the mixed coating material is allowed to have film hardness of 1H or more, and a film on a surface of an article to be coated is hardly peeled even by erosion.

Further, the ultraviolet curable resin having the film hardness of 4H or more is preferred. When a mixing ratio of the PTFE is increased in order to enhance a water repellent effect, the film hardness of the mixed coating material decreases due to the increase of the PTFE. However, when using the ultraviolet curable resin having the film hardness of 4H or more, the mixed coating material is allowed to have the film hardness of 1H or more even if the mixing ratio of the ultraviolet curable resin decreases. In addition, a sensitizer, a conjugate catalyst or a crosslinking agent may be added to the ultraviolet curable resin in order to progress a chemical reaction or to improve the film hardness.

The PTFE is prepared, for example, by a manufacturing method described in Japanese Patent No. 1937532. However, the PTFE is not limited to that prepared by the above-described manufacturing method. Any PTFE may be used as long as it can be preferably mixed with the ultraviolet curable resin. The PTFE ha a high water repellent effect and is preferably mixed with the ultraviolet curable resin. Therefore, the PTFE having an average molecular weight of 500 to 2,000 is particularly preferred.

The mixed resin is constituted by mixing the ultraviolet curable resin with the PTFE. In particular, the mixed resin is constituted by mixing 40 to 99% by weight of the ultraviolet curable resin with 1 to 60% by weight of the PTFE. When using the mixed resin, the mixed coating material is allowed to have the film hardness of 1H or more, in which the film is hardly peeled by erosion. Further, the mixed resin is preferably constituted by mixing 60% by weight of the ultraviolet curable resin with 40% by weight of the PTFE. When using the mixed resin, the high water repellent effect and erosion resistant property of the mixed coating material can be improved.

Examples of the hydrofluorocarbon include HFC-32, HFC-125, HFC-134a, HFC-143a, HFC-152a and HFC-245fa. Fluorocarbons, for example, hydrochlorofluorocarbon (HCFC) such as HCFC-22 and HCFC-123, and chlorofluorocarbon (CFC) such as CFC-11 may also be used as the hydrofluorocarbon.

Examples of the organic solvent include an alcohol organic solvent such as an ethyl alcohol and an isopropyl alcohol, an aromatic organic solvent such as benzene, toluene and xylene, and an aliphatic organic solvent such as n-hexane, n-heptane and butyl acetate. However, any organic solvent may be used as long as the organic solvent can preferably mix the mixed resin with the hydrofluorocarbon and can be used for manufacturing a coating material.

The hydrofluorocarbon-containing organic solvent is constituted by mixing the hydrofluorocarbon with the organic solvent. By using the hydrofluorocarbon-containing organic solvent, a surface energy difference between the ultraviolet curable resin and the PTFE is reduced, so that wettability can be improved and as a result, a gap generated between both of the resins can be reduced. Accordingly, the mixed coating material using the hydrofluorocarbon-containing organic solvent allows the ultraviolet curable resin and the PTFE to be uniformly coated on the surface of the article to be coated, so that a high water repellent effect and an erosion resistant property can be obtained.

In this case, when increasing the mixing ratio of the ultraviolet curable resin to the PTFE in the mixed resin, it is preferable to increase the mixing ratio of the hydrofluorocarbon to the organic solvent in the hydrofluorocarbon-containing organic solvent, in order to preferably dissolve the ultraviolet curable resin.

Further, the hydrofluorocarbon-containing organic solvent is preferably constituted by mixing 1 to 80% by weight of the hydrofluorocarbon with 20 to 99% by weight of the organic solvent. When using the hydrofluorocarbon-containing organic solvent, the ultraviolet curable resin is dissolved by the hydrofluorocarbon and at the same time, the ultraviolet curable resin and the PTFE can be more preferably mixed by the hydrofluorocarbon and the organic solvent. On this occasion, when containing at least 20% by weight of the organic solvent, the ultraviolet curable resin and the PTFE can be more preferably mixed in a compatible state. Therefore, the mixed coating material in this state can be uniformly coated on the surface of the article to be coated.

Further, the hydrofluorocarbon-containing organic solvent is preferably mixed in an amount of 80% by weight with respect to 20% by weight of the mixed resin comprising the ultraviolet curable resin and the PTFE. When employing this mixing ratio, the mixed resin can be preferably mixed in the hydrofluorocarbon-containing organic solvent, and moreover, the mixed coating material can be more preferably coated uniformly on the surface of the article to be coated.

The manufacturing method of the mixed coating material is described below. However, the present invention is not limited thereto.

The mixed resin is constituted by mixing the ultraviolet curable resin with the PTFE from which an organic solvent is dried. Thereafter, the hydrofluorocarbon-containing organic solvent is added to the mixed resin. After completion of the addition, the mixture is stirred for 5 minutes by a dispenser and further stirred for 15 minutes by a motor mill. Thus, the prepared mixed coating material is obtained.

The obtained mixed coating material can be coated on a transportation device, a wind turbine blade, an antenna, an electric wire and an architectural structure. Further, the coating material may be coated on an elemental substance such as aluminum, iron and copper, or alloys of these metals, crockery such as tile, plastics such as PET, and other materials such as paper, fabric, nonwoven fabric and film surface.

The mixed coating material of the present invention has a higher film hardness than a conventional coating material prepared by mixing a polysilicon resin with a PTFE and therefore, has excellent erosion resistant property. Further, the mixed coating material of the present invention has a high water repellent effect and therefore, can exert an anti-icing and deicing effect when being coated on a transportation device and the like. In particular, when coating the mixed coating material on an aircraft where erosion easily occurs, the film of the material is prevented from being peeled even by erosion and moreover, the coating material exerts the anti-icing and deicing effect also on the portion beyond the capability of the anti-icing and deicing device, so that the fuel consumption during navigation can be reduced.

EXAMPLES

Examples of the present invention are described below. The present invention is not limited thereto.

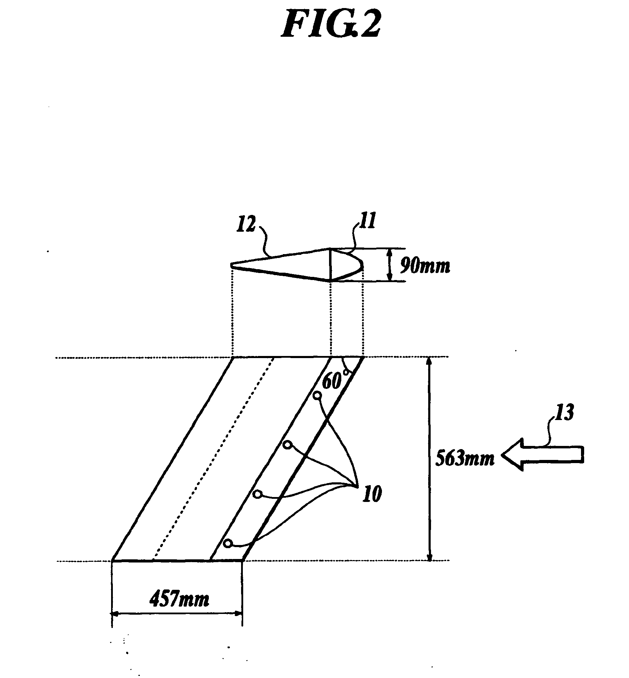

First of all, an icing tunnel 3 and a model wing of a test specimen used in an ice accretion test are described. As shown in FIG.2, the model wing of the test specimen comprises a leading edge 11 and a trailing edge 12, and has a thickness of 90 mm. The model wing of the test specimen has a width of 563 mm and a length of 457 mm. An angle formed by intersecting the width with the leading edge 11 in the model wing of the test specimen is 60 degrees.

The icing tunnel 3 for use in the ice accretion test of the present invention is formed to a size of 2 m in length, 0.2 m in width and 0.27 m in height. Outside the icing tunnel 3, a low temperature room 1 is provided so as to cover the device 3. The low temperature room 1 is formed to a size of 5 m in length, 3 m in width and 2 m in height. The low temperature room 1 inside is formed such that a temperature within the low temperature room can be adjusted according to experimental conditions. A test specimen installation location 2 for fixing the model wing of the test specimen is disposed at one end in the inside of the device 3. A blower 6 that sends air 13 within the device 3 and an airflow-arranging device 5 that arranges the direction of the flow of air 13 from the blower 6 are provided at the other end of the device 3. By changing the output of the blower 6, the wind velocity within the device 3 can be adjusted according to the experimental conditions.

Further, a spray nozzle 7 is installed at a position which is on an upper surface of the device 3 and which is at a distance of 1.5 m from the test specimen installation location 2. To the spray nozzle 7, a tank 8 with a water storage pump and an air compressor 9 each are connected. By operating the air compressor 9, water is sent from the tank 8 to the spray nozzle 7 so that a predetermined amount of water particles can be sprayed from the spray nozzle 7 according to the experimental conditions.

[Example 1]

10 g of an acrylate resin having the film hardness of 5H (UV-75; produced by Origin Electric Co., Ltd.) and 11 g of a dried PTFE were mixed. To both of the resins mixed, an organic solvent prepared by mixing 24 g of hydrofluorocarbon (manufactured by Du Pont-Mitsui Fluorochemicals Co., LTD.) with 55 g of an isopropyl alcohol was added. After completion of the addition, the mixture was stirred for 5 minutes by a dispenser and further stirred for 15 minutes by a motor mill (manufactured by Eiger Japan) at a room temperature, whereby a prepared mixed coating material was obtained.

By using an air spray gun (manufactured by Anest Iwata Corporation), the prepared mixed coating material was applied to the surface of the model wing of the aluminum test specimen which was previously subjected to a blast treatment and then degreased. Then the surface of the model wing of the aluminum test specimen was dried. On this occasion, the coating conditions of the air spray gun were set such that a nozzle diameter of the spray gun was 1.5 mm, an air pressure was 0. 3MP a, and the number of times of repeating application was three times (a film thickness was 30 micron).

After completion of the drying, the coated model wing of the test specimen was fixed on the test specimen installation location 2. Then, the ice accretion test was carried out as follows. From the spray nozzle 7, water particles having a water content of 0.5 g/m$^3$ and a spray average particle size of 20 $\mu$m was sprayed for spraying time of 960 seconds. The measurement was carried out under the conditions of a room temperature of -5°C and a wind velocity of 18 m/sec.

After completion of the ice accretion test, an ice accretion amount (g) of the test specimen was measured. The measurement was repeated five times and an average of the measurement results was defined as the ice accretion amount. An ice accretion ratio was determined assuming that the ice accretion amount in Comparative Example 3 was 100%.

```
Ice accretion amount of test specimen (g) = Test specimen

weight after ice accretion test (g) - Test specimen weight

before ice accretion test (g)
```

[Example 2]

15 g of an acrylic urethane resin (C-4546X-1; produced by Shinto Paint Co., Ltd.) having the film hardness of 9H or more and 11 g of the dried PTFE were mixed and then thereto, the hydrofluorocarbon-containing organic solvent was added. To both of the resins mixed, an organic solvent prepared by mixing 52 g of hydrofluorocarbon (Du Pont-Mitsui Fluorochemicals Co., LTD.) with 25 g of an isopropyl alcohol was added. After completion of the addition, the stirring operation, the coating operation and the ice accretion test were performed in the same way as in the Example 1.

[Comparative Example 1]

In Comparative Example 1, the coating operation was not performed on the test specimen and the ice accretion test was performed in the same way as in the Example 1.

[Comparative Example 2]

In Comparative Example 2, a commercially available polyurethane coating material was used, and the coating operation and the ice accretion test were performed in the same way as in the Example 1.

[Comparative Example 3]

In Comparative Example 3, a commercially available coating material prepared by mixing the PTFE and a polysilicon resin described in JP-Tokukai-2000-44863 was used, and the coating operation and the ice accretion test were performed in the same way as in the Example 1.

The ice accretion amounts and the ice accretion ratios in Example 1 and Example 2, and in Comparative Example 1 to Comparative Example 3 are shown in the following Table.

[Table 1]

|  | EXAMPLE 1 | EXAMPLE 2 | COMPARATIVE EXAMPLE 1 | COMPARATIVE EXAMPLE 2 | COMPARATIVE EXAMPLE 3 |
|---|---|---|---|---|---|
| ICE ACCRETION AMOUNT | 6.9g | 5.5g | 20.9g | 20.5g | 20.5g |
| ICE ACCRETION RATIO | 34% | 27% | 102% | 100% | 100% |

From the above-described ice accretion test results, it was found that the ice accretion amounts in Comparative Example 2 and Comparative Example 3 were almost the same as that in Comparative Example 1 and therefore, the anti-icing and deicing effect was not observed at all in Comparative Example 2 and Comparative Example 3. From observation using an electron microscope, it was found that the reason why the ice accretion amount in Comparative Example 3 was the same as that in Comparative Example 2 was as follows: a film of the coating material prepared by mixing the PTFE resin with the polysilicon resin in Comparative Example 3 was peeled by erosion.

In the comparison between Example 1 and Comparative Example 3, it was found that the ice accretion amount in Example 1 was 66% less than that in Comparative Example 3 and therefore, the anti-icing and deicing effect was observed in Example 1. In the comparison between Example 2 and Comparative Example 3, the ice accretion amount in Example 2 was 73% less than that in Comparative Example 3 and therefore, the-anti-icing and deicing effect was observed in Example 2.

Accordingly, from the test results that the anti-icing and deicing effect was observed in Example 1 and Example 2, it was found that the films of the mixed coating materials in Example 1 and Example 2 were prevented from being peeled even by erosion under conditions where erosion occurred so that the high water repellent effect of the PTFE could be kept, different from the film in Comparative Example 3.

Further, from the comparison between Example 1 and Example 2, it was found that when increasing the film hardness of the ultraviolet curable resin from 5H to 9H or more, the ice accretion ratio decreased from 34% to 27%. The reason why the ice accretion ratio decreased was considered that the hydrofluorocarbon was used as one of the components in the mixed coating material and therefore, even when mixing the PTFE and the ultraviolet curable resin having the high film hardness, which were hardly mixed normally, both of the resins could become intimate and as a result, the prepared coating material could be uniformly coated on the surface of the article to be coated. Further, it was found that when mixing the ultraviolet curable resin having the higher film hardness, the mixed coating material was allowed to have the film hardness of 1H or more and as a result, the film on the surface of the article to be coated was prevented from being peeled even by erosion so that the anti-icing and deicing effect could be more enhanced.

From the above test results, it is found that according to the present invention, the mixed coating material constituted by mixing the mixed resin comprising the ultraviolet curable resin and the PTFE with the hydrofluorocarbon-containing organic solvent has a high anti-icing and deicing effect of allowing the film to withstand erosion and allowing the film to be uniformly formed on the surface of the article to be coated so that water on the film surface can be effectively repelled to allow reduction of the ice accretion. Further, it is found that the mixed coating material can be applied also to aircraft in which strong erosion occurs.

In addition, it is also found that according to the manufacturing method of the mixed coating material, the mixed coating material having high erosion resistance property and high film hardness can be manufactured.

**Claims**

1. A mixed coating material comprising:

   a mixed resin including an ultraviolet curable resin and a low molecular weight tetrafluoroethylene resin; and
   a hydrofluorocarbon-containing organic solvent,

   wherein the mixed resin and the hydrofluorocarbon-containing organic solvent are mixed to allow the coating material to have film hardness of 1H or more.

**2.** The mixed coating material as claimed in claim 1, wherein the ultraviolet curable resin comprises a prepolymer, a monomer and a photopolymerization initiator and is cured by irradiation of UV having a wavelength region of 200 to 400 nm.

**3.** The mixed coating material as claimed in claim 1 or 2, wherein the ultraviolet curable resin has a film hardness of 4H or more.

**4.** The mixed coating material as claimed in any one of claims 1 to 3, wherein the mixed resin comprises 40 to 99% by weight of the ultraviolet curable resin and 1 to 60% by weight of the low molecular weight tetrafluoroethylene resin.

**5.** The mixed coating material as claimed in any one of claims 1 to 4, wherein the hydrofluorocarbon-containing organic solvent comprises 1 to 80% by weight of the hydrofluorocarbon and 20 to 99% by weight of an organic solvent.

**6.** The mixed coating material as claimed in claim 5, wherein the organic solvent is an organic solvent comprising one or more selected from a group consisting of an alcohol organic solvent, an aromatic organic solvent and an aliphatic organic solvent.

**7.** A method for manufacturing a mixed coating material, comprising preparing the mixed coating material to have a film hardness of 1H or more by adding a hydrofluorocarbon-containing organic solvent to a mixed resin comprising an ultraviolet curable resin and a low molecular weight tetrafluoroethylene resin.

**Patentansprüche**

**1.** Gemischtes Beschichtungsmaterial, das Folgendes umfasst:

ein gemischtes Harz, umfassend ein durch Ultraviolettlicht aushärtendes Harz und ein Tetrafluorethylenharz mit niedrigem Molekulargewicht; und
ein Fluorkohlenwasserstoff enthaltendes organisches Lösungsmittel,

wobei das gemischte Harz und das Fluorkohlenwasserstoff enthaltende organische Lösungsmittel vermischt werden, damit das Beschichtungsmaterial eine Filmhärte von 1 H oder mehr aufweisen kann.

**2.** Gemischtes Beschichtungsmaterial nach Anspruch 1, wobei das durch Ultraviolettlicht aushärtende Harz ein Vorpolymer, ein Monomer und einen Fotopolymerisationsinitiator umfasst und durch Bestrahlung mit UV mit einem Wellenlängenbereich von 200 bis 400 nm ausgehärtet wird.

**3.** Gemischtes Beschichtungsmaterial nach Anspruch 1 oder 2, wobei das durch Ultraviolettlicht aushärtende Harz eine Filmhärte von 4H oder mehr aufweist.

**4.** Gemischtes Beschichtungsmaterial nach einem der Ansprüche 1 bis 3, wobei das gemischte Harz 40 bis 99 Gewichts-% des durch Ultraviolettlicht aushärtenden Harzes und 1 bis 60 Gewichts-% des Tetrafluorethylenharzes mit niedrigem Molekulargewicht umfasst.

**5.** Gemischtes Beschichtungsmaterial nach einem der Ansprüche 1 bis 4, wobei das Fluorkohlenwasserstoff enthaltende organische Lösungsmittel 1 bis 80 Gewichts-% des Fluorkohlenwasserstoffs und 20 bis 99 Gewichts-% eines organischen Lösungsmittels umfasst.

**6.** Gemischtes Beschichtungsmaterial nach Anspruch 5, wobei es sich bei dem organischen Lösungsmittel um ein organisches Lösungsmittel handelt, das eines oder mehrere aus einer aus einem organischen Alkohollösungsmittel, einem aromatischen organischen Lösungsmittel und einem aliphatischen organischen Lösungsmittel bestehenden Gruppe gewählte Lösungsmittel umfasst.

**7.** Verfahren zum Herstellen eines gemischten Beschichtungsmaterials, umfassend das Zubereiten des gemischten Beschichtungsmaterials, so dass es eine Filmhärte von 1H oder mehr hat, indem ein Fluorkohlenwasserstoff enthaltendes organisches Lösungsmittel zu einem gemischten Harz hinzugegeben wird, das ein durch Ultraviolettlicht aushärtendes Harz und ein Tetrafluorethylenharz mit niedrigem Molekulargewicht umfasst.

**Revendications**

1. Matériau de revêtement mélangé comportant :

   une résine mélangée comprenant une résine séchable sous ultraviolet et une résine de tétrafluoréthylène de faible poids moléculaire ; et
   un solvant organique contenant un hydrofluorocarbure,

   où la résine mélangée et le solvant organique contenant un hydrofluorocarbure sont mélangés pour permettre au matériau de revêtement d'être doté d'une dureté de film de 1 H ou plus.

2. Matériau de revêtement mélangé conforme à la revendication 1, où la résine séchable sous ultraviolet comporte un prépolymère, un monomère et un amorceur de photopolymérisation et est séchée par irradiation d'ultraviolet doté d'une zone de longueur d'onde de 200 à 400 nm.

3. Matériau de revêtement mélangé conforme à la revendication 1 ou 2, où la résine séchable sous ultraviolet a une dureté de film de 4 H ou plus.

4. Matériau de revêtement mélangé conforme à une quelconque des revendications 1 à 3, où la résine mélangée comporte 40 à 99% en poids de la résine séchable sous ultraviolet et 1 à 60% en poids de la résine de tétrafluoréthylène de faible poids moléculaire.

5. Matériau de revêtement mélangé conforme à une quelconque des revendications 1 à 4, où le solvant organique contenant un hydrofluorocarbure comporte 1 à 80% en poids de l'hydrofluorocarbure et 20 à 99% en poids d'un solvant organique.

6. Matériau de revêtement mélangé conforme à la revendication 5, où le solvant organique est un solvant organique comprenant un solvant ou plus choisis dans le groupe consistant en un solvant organique alcoolique, un solvant organique aromatique et un solvant organique aliphatique.

7. Méthode de fabrication d'un matériau de revêtement mélangé, comportant la préparation du matériau de revêtement mélangé afin qu'il soit doté d'une dureté de film de 1 H ou plus en ajoutant un solvant organique contenant un hydrofluorocarbure à une résine mélangée comportant une résine séchable sous ultraviolet et une résine de tétrafluoréthylène de faible poids moléculaire.

FIG.1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004119074 A
- JP 58221800 A
- JP 2000044863 A
- JP 1937532 A